# EUROPÄISCHE PATENTSCHRIFT

(11) **EP 0 657 342 B1**
(45) Veröffentlichungstag und Bekanntmachung des Hinweises auf die Patenterteilung: **18.06.1997**
(21) Anmeldenummer: 94117730.5
(22) Anmeldetag: 10.11.1994
(51) Int. Cl.: B62D 25/00, B60R 21/13

(54) **Vorrichtung zur Erhöhung der Knicksteifigkeit von Windschutzsäulen eines Fahrzeuges**
Bending force reinforcement for car windscreen posts
Dispositif de renforcement des colonnes de pare-brise contre la force de flexion

(30) Priorität: 06.12.1993 DE 4341499
(43) Veröffentlichungstag der Anmeldung: 14.06.1995
(73) Patentinhaber: Dr.Ing.h.c. F. Porsche Aktiengesellschaft, 70435 Stuttgart (DE)
(72) Erfinder: Koehr, Robert, D-67435 Neustadt (DE)

(56) Entgegenhaltungen:
- EP-A- 0 189 819
- DE-A- 3 427 537
- DE-A- 3 802 520

## Beschreibung

Die Erfindung betrifft eine Vorrichtung zur Erhöhung der Knicksteifigkeit von Windschutzsäulen eines Fahrzeuges, insbesondere von stark geneigten Windschutzsäulen eines Cabriolets gemäß dem Oberbegriff des Patentanspruches 1.

Bei einer bekannten Vorrichtung der eingangs genannten Gattung (DE 34 27 537 A1) ist in einem zwischen einem Türaußenblech und einem Türinnenblech gebildeten Hohlraum einer vorderen Fahrzeugtür eine mit einer Aktivierungseinrichtung zusammenwirkende, etwa in Fahrzeuglängsrichtung verlaufende Stützstrebe vorgesehen, die in ihrer Ablagestellung annäherend horizontal ausgerichtet ist. Die Aktivierungseinrichtung wird durch eine Servoeinrichtung gebildet, die die Stützstrebe im Gefahrenfall von der Ablagestellung in eine hochgeschwenkte Wirkstellung bewegt. An der Windschutzsäule ist eine Führungschiene angebracht, in der das der Windschutzsäule zugekehrte Ende der Stützstrebe beim Hochschwenken geführt wird. In der Wirkstellung ist ein Ende der Stützstrebe mit einer innerhalb des Hohlraumes der Fahrzeugtür angeordneten Türverstärkung gelenkig verbunden, wogegen das andere Ende der Stützstrebe mit einem oberen Endbereich der Windschutzsäule verbunden ist.

Dieser Anordnung haftet der Nachteil an, daß zur Unterbringung der Stützstrebe, der Aktivierungseinrichtung und der separaten rohrförmigen Türverstärkung seitlich neben der Türfensterscheibe ein relativ großer Bauraum innerhalb des Hohlraumes in Fahrzeugquerrichtung benötigt wird, so daß die Fahrzeugtür relativ breit ausgebildet werden muß, wodurch die freie Gestaltung der Fahrzeugtür stark eingeschränkt wird. Ferner weisen die oben genannten Bauteile zusammen ein relativ hohes Gewicht auf. Um die Funktion der Vorrichtung sicherzustellen, muß die Fahrzeugtür im Bereich ihrer Gürtellinie einen relativ breiten Austrittsspalt aufweisen, durch den die Stützstrebe im Gefahrenfall hindurchgeführt wird. Dieser Spalt muß in Ablagestellung der Stützstrebe ausreichend abgedichtet sein, um das Eindringen von Wasser von der Türfensterscheibe in den Türhohlraum weitgehend zu vermeiden.

Da die Vorrichtung sowohl in der Ablagestellung als auch in der Wirkstellung fest mit der Fahrzeugtür verbunden ist, läßt sich die Fahrzeugtür nach einem Fahrzeugüberschlag unter Umständen nur schwer öffnen.

Aufgabe der Erfindung ist es, eine Vorrichtung zur Erhöhung der Knicksteifigkeit von Windschutzsäulen eines Fahrzeuges gemäß der eingangs genannten Gattung so weiterzubilden, daß sie bei einfachem Aufbau und geringem Gewicht eine gute Funktion aufweist, wobei sich die Fahrzeugtür auch nach einem Fahrzeugüberschlag leicht öffnen läßt und die freie Gestaltung der Fahrzeugtür nicht eingeschränkt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die lösbare Anordnung der Stützstrebe in ihrer Ablagestellung an einer dem Fahrgastraum zugekehrten stufenförmigen Einprägung der Fahrzeugtür die freie Gestaltung derselben nicht eingeschränkt wird. Der Hohlraum zwischen Türinnenblech und Türaußenblech zur Aufnahme der Türfensterscheibe muß nicht vergrößert werden und der Austrittsspalt für die Türfensterscheibe kann in herkömmlicher Weise ausgebildet werden. Die Stützstrebe ist in ihrer Ablagestellung durch einen schwenkbaren Abschnitt der Türinnenverkleidung abgedeckt und tritt nicht störend in Erscheinung. Gemäß einer weiteren Ausführungsform ist die Stützstrebe mit einer Ummantelung versehen, die dem Formverlauf der stufenförmigen Einprägung und der Türinnenverkleidung angepaßt ist. Bei dieser Variante bildet die Stützstrebe quasi einen oberen Endbereich der Türinnenverkleidung. Ferner bildet die Stützstrebe in ihrer Ablagestellung und bei geschlossener Fahrzeugtür eine seitliche Türverstärkung bei einem Seitencrash.

Die Stützstrebe ist lösbar mit der Fahrzeugtür verbunden und wird beim Hochschwenken in die Wirkstellung von dieser entkoppelt. Dadurch lassen sich auch nach einem Überschlag die Fahrzeugtüren einfach und schnell öffnen.

In der Wirkstellung ist die Stützstrebe mit einem oberen Endbereich der Windschutzsäule und einer feststehenden, benachbart der Fahrzeugtür angeordneten Aufnahme kraftübertragend verbunden. Durch die beiden seitlichen Stützstreben und die fest Verbindung mit dem querverlaufenden oberen Scheibenrahmen bzw. den aufbauseitigen Aufnahmen erfolgt eine Stabilisierung des Aufbaues gegen seitliche Kräfte (Dreiecksverbund).

Im Gefahrenfall, d.h. nach Auslösen eines Sensors, wird die Stützstrebe durch die Aktivierungseinrichtung in einen ersten Rohrabschnitt der Aufnahme hineinbewegt. Bei einer Fehlauslösung kann die Stützstrebe in einfacher Weise wieder in ihre Ablagestellung zurückgeführt werden. Bei einem Überschlag und somit einer Krafteinwirkung von oben auf die Windschutzsäule wird die Stützstrebe in einen zweiten Rohrabschnitt der Aufnahme hineinbewegt, der einen kleineren Durchmesser aufweist als der Außendurchmesser der Stützstrebe. Durch Aufweiten des zweiten Rohrabschnittes wird wirkungsvoll Energie absorbiert. Ein im zweiten Rohrabschnitt angeordneter Anschlag begrenzt die Eindringbewegung der Stützstrebe in die Aufnahme. Durch die lösbare Befestigung der Aufnahme am Aufbau läßt sich diese in einfacher Weise ausbauen und gegen eine neue ersetzen.

Ein Ausführungsbeispiel der Erfindung ist in der nachfolgenden Beschreibung und den zugehörigen Zeichnungen näher dargestellt.

Es zeigt
- Fig. 1: eine Teilseitenansicht eines Kraftfahrzeuges mit einer Vorrichtung zur Erhöhung der Knicksteifigkeit der Windschutzsäulen in der Nichtgebrauchstellung (Ablagestellung A),
- Fig. 2: eine Teilseitenansicht eines Kraftfahrzeuges mit der Vorrichtung zur Erhöhung der Knicksteifigkeit der Windschutzsäulen in einer hochgeschwenkten Stellung C, in der eine Stützstrebe der Vorrichtung in einen ersten Abschnitt einer aufbauseitigen Aufnahme eingreift,
- Fig. 3: eine Teilseitenansciht entsprechend Fig. 2 jedoch in Wirkstellung B der Vorrichtung, wobei die Stützstrebe in einen zweiten Abschnitt der Aufnahme eindringt,
- Fig. 4: einen Schnitt nach der Linie IV-IV der Fig. 1 in größerem Maßstab mit einer erste Ausführungsform der Stützstrebe,
- Fig. 5: einen Schnitt gemäß Fig. 4 einer weiteren Ausführungsform der Stützstrebe,
- Fig. 6: einen Schnitt nach der Linie VI-VI der Fig. 1 in größerem Maßstab,
- Fig. 7: einen Schnitt nach der Linie VII-VII der Fig. 2 in größerem Maßstab,
- Fig. 8: einen Schnitt nach der Linie VIII-VIII der Fig. 1 in größerem Maßstab,
- Fig. 9: eine Ansicht in Pfeilrichtung R der Fig. 7,
- Fig. 10: einen Schnitt nach der Linie X-X der Fig. 8,
- Fig. 11: eine Frontansicht auf eine Ausführungsform einer Aktivierungseinrichtung der Vorrichtung.

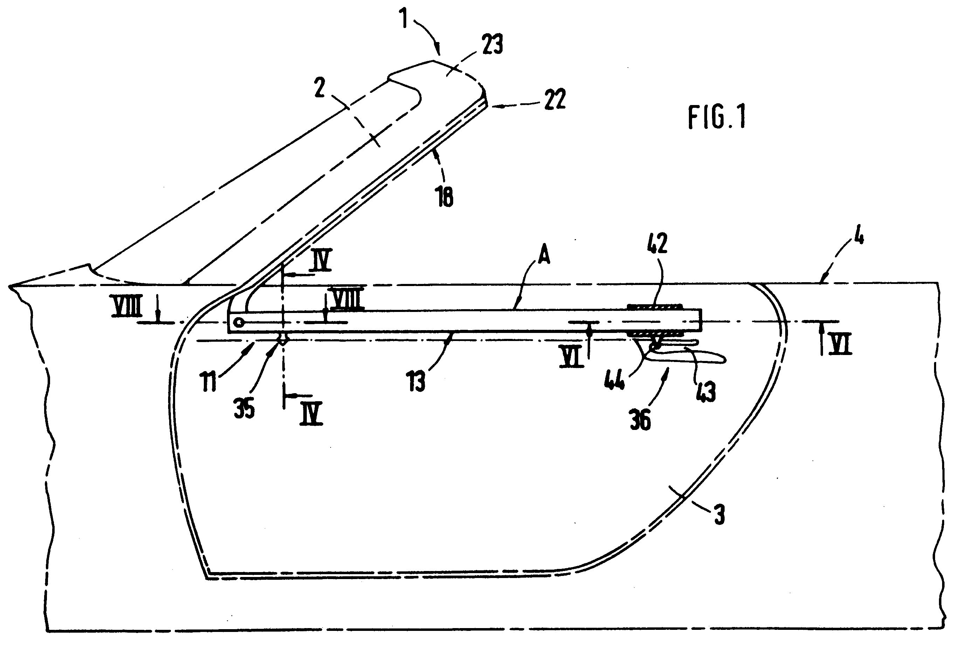

Fig. 1 zeigt einen Teilbereich eines durch ein Cabriolet 1 gebildeten Fahrzeuges, das im dargestellten Bereich eine relativ stark geneigte Windschutzsäule 2 und eine vordere Fahrzeugtür 3 aufweist. Die Fahrzeugtür 3 ist oberhalb einer Gürtellinie 4 rahmenlos ausgebildet und umfaßt eine höhenverstellbare Türfensterscheibe 5, die in ihrer abgesenkten Stellung innerhalb eines Hohlraumes eines Türkörpers 6 aufgenommen ist. Der Türkörper 6 setzt sich in herkömmlicher Weise aus einem Türinnenblech 7 und einem Türaußenblech 8 zusammen, die in einem Teilbereich ihres Umfangs fest miteinander verbunden sind.

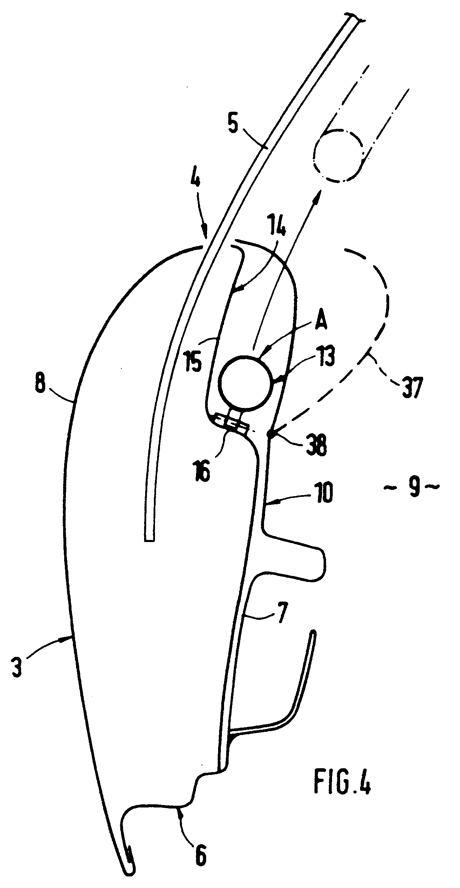

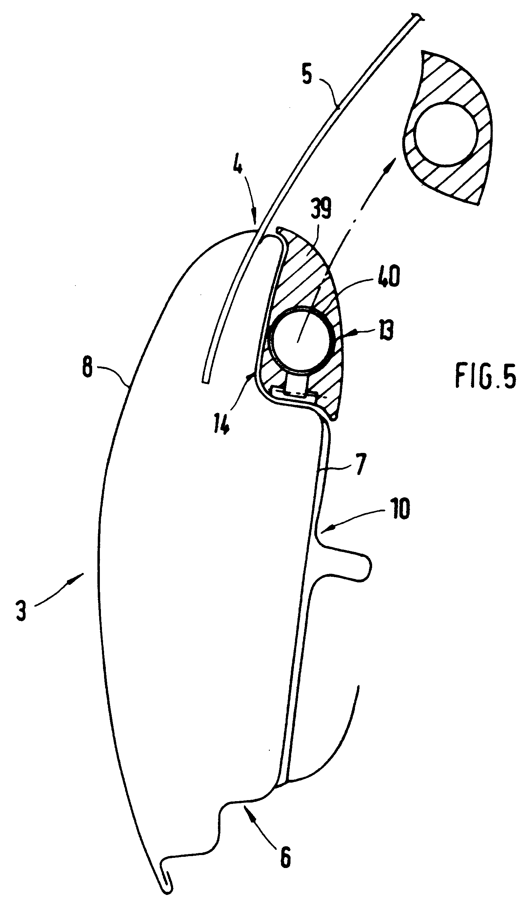

Die Fahrzeugtür 3 ist auf der einem Fahrgastraum 9 zugekehrten Seite mit einer Türinnenverkleidung 10 versehen, die örtlich lösbar mit dem Türinnenblech 7 verbunden ist (Fig. 4 und 5).

Zur Erhöhung der Knicksteifigkeit der Windschutzsäulen 2 bei einem Fahrzeugüberschlag ist eine Vorrichtung 11 vorgesehen, die sich im wesentlichen aus einer Aktivierungseinrichtung 12 und einer mit dieser zusammenwirkenden Stützstrebe 13 zusammensetzt.

Die Aktivierungseinrichtung 12 wird durch einen Seilzug, ein Federelement, eine Servoeinrichtung oder dgl. gebildet und wirkt mit der Stützstrebe 13 zusammen, und zwar mit dem der Windschutzsäule 2 zugekehrten Ende der Stützstrebe 13. Ausgelöst wird die Aktivierungseinrichtung 12 durch einen nicht näher dargestellten Sensor.

In ihrer Ablagestellung A ist die Stützstrebe 13 an einer dem Fahrgastraum 9 zugekehrten stufenförmigen Einprägung 14 der Fahrzeugtür 3 lösbar festgelegt (Fig. 1 und 4). Die Einprägung 14 ist benachbart der Gürtellinie 4 am Türinnenblech 7 ausgebildet und setzt sich aus einem aufrechten Abschnitt 15 und einem daran anschließenden unteren, horizontalen Abschnitt 16 zusammen.

Die in Fahrzeuglängsrichtung verlaufende Stützstrebe 13 erstreckt sich in ihrer Ablagestellung A über einen wesentlichen Teil der Länge der Fahrzeugtür 3, wobei ein vorderes, abgeflachtes Ende 17 der Stützstrebe 13 bei geschlossener Fahrzeugtür 3 mit einem innerhalb einer Führungsschiene 18 angeordneten winkelförmigen Gleitstück 19 in Wirkverbindung steht (Fig. 8).

Ein in Fahrzeugquerrichtung abgestellter, nach außen hin ragender Schenkel 20 des Gleitstückes 19 ragt dabei durch eine Öffnung 21 eines abgeflachten Endbereiches der Stützstrebe 13 hindurch. Bei geöffneter Fahrzeugtür 3' ist die Stützstrebe 13' außer Eingriff mit dem Schenkel 20 des Gleitstückes 19 (Fig.8; strichpunktiert dargestellt).

Die Führungsschiene 18 ist im Querschnitt gesehen etwa C-förmig profiliert und erstreckt sich entlang der seitlichen Windschutzsäulen 2 des Fahrzeuges, und zwar von einem unterhalb der Gürtellinie 4 angeordneten vorderen unteren Ende bis zu einem oberen Endbereich 22 der Windschutzsäulen 2, zwischen den beiden seitlich außenliegenden oberen Endbereichen 22 der Windschutzsäulen 2 erstreckt sich ein querverlaufender oberer Scheibenrahmen 23 .

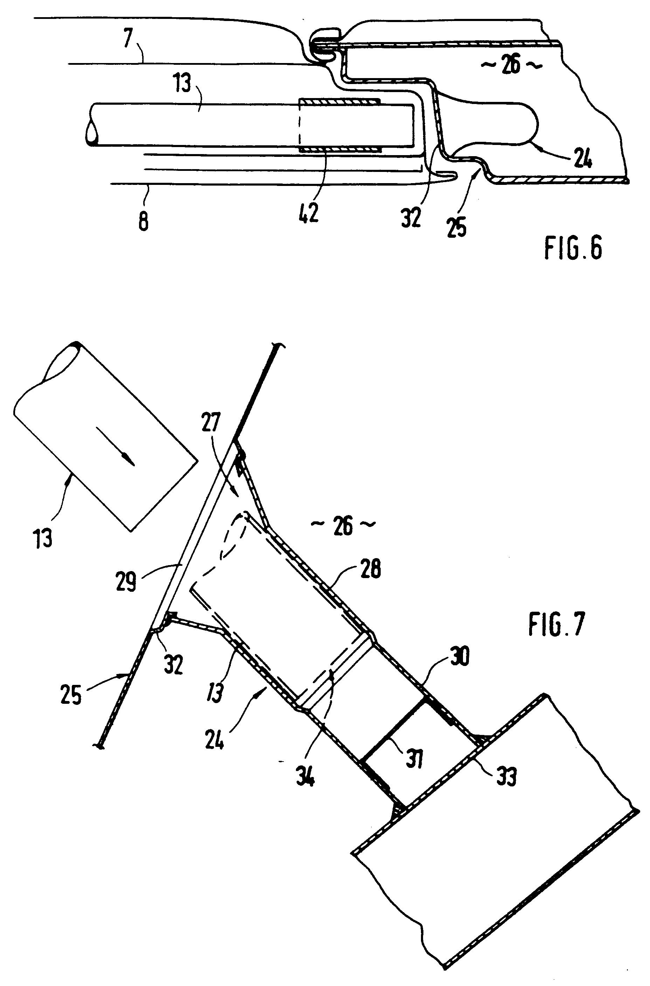

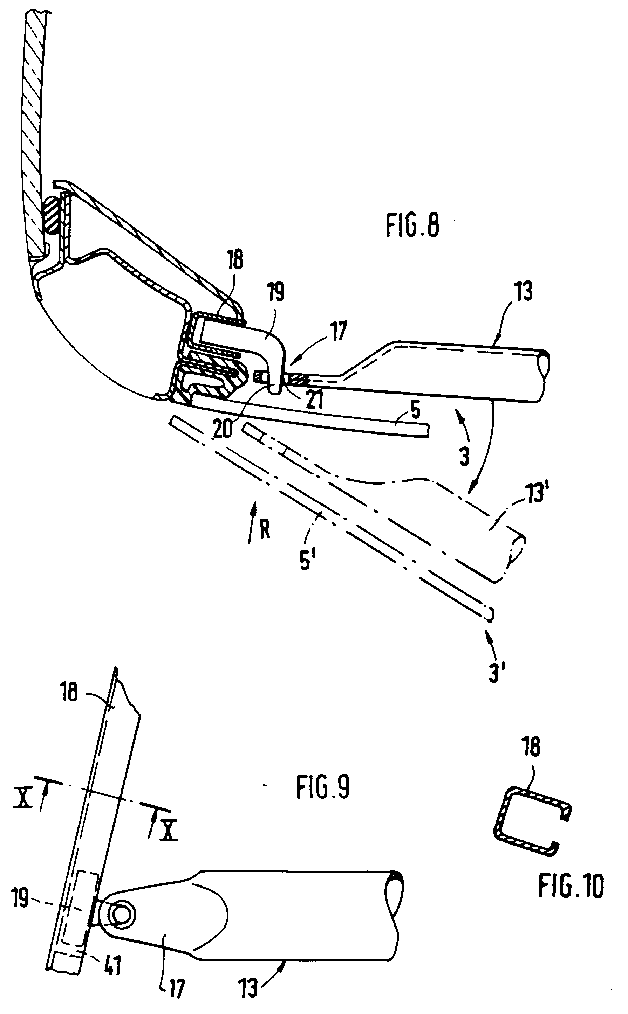

In einer hochgeschwenkten Stellung C und einer Wirkstellung B ist die Stützstrebe 13 von der Fahrzeugtür 3 vollständig entkoppelt und in der Wirkstellung B einerseits mit dem oberen Endbereich 22 der Windschutzsäule 2 und andererseits mit einer benachbart der Fahrzeugtür 3 angeordneten feststehenden Aufnahme 24 kraftübertragend verbunden. Die Aufnahme 24 ist in Fahrtrichtung gesehen hinter der Fahrzeugtür 3 angeordnet und zwar im Bereich einer aufrechten B-Säule 25. Gemäß Fig. 6 ist die Aufnahme 24 innerhalb eines Hohlraumes 26 der B-Säule 25 angebracht. Es besteht aber auch die Möglichkeit, die Aufnahme 24 außerhalb des Hohlraumes 26 der B-Säule 25 anzuordnen und zwar auf der dem Fahrgastraum 9 zugekehrten Seite der B-Säule 25.

Entsprechend Fig. 7 umfaßt die Aufnahme 24 zumindest einen mit einer vorgelagerten, trichterförmig erweiterten Einführöffnung 27 versehenen ersten Rohrabschnitt 28, wobei zwischen dem ersten Rohrabschnitt 28 und der Außenkontor der Stützstrebe 13 ein Spielsitz vorgesehen ist.

Die Einführöffnung 27 an der B-Säule 25 ist mit einer dünnwandigen Abdeckung 29 versehen, die beim Einführen der Stützstrebe 13 durchbrochen bzw. durchstoßen wird.

An den ersten Rohrabschnitt 28 schließt sich - in Einführrichtung der Stützstrebe 13 gesehen - ein zweiter Rohrabschnitt 30 an, der einen kleineren Innendurchmesser aufweist als der Außendurchmesser der Stützstrebe 13, wobei im Bereich der Längserstreckung des zweiten Rohrabschnittes 30 ein innenliegender Anschlag 31 angeordnet ist, der die Eindringbewegung der Stützstrebe 13 begrenzt. Die Aufnahme 24 ist gemäß Fig. 7 einerseits mit einem querverlaufenden Wandabschnitt 32 der B-Säule 25 und andererseits mit einem außenliegenden Fahrzeuglängsträger 33 verbunden. Die Verbindung kann durch Schweißen, Schrauben oder dgl. erfolgen, wobei die Austauschbarkeit der Aufnahme 24 durch eine lösbare Anbindung erleichtert wird.

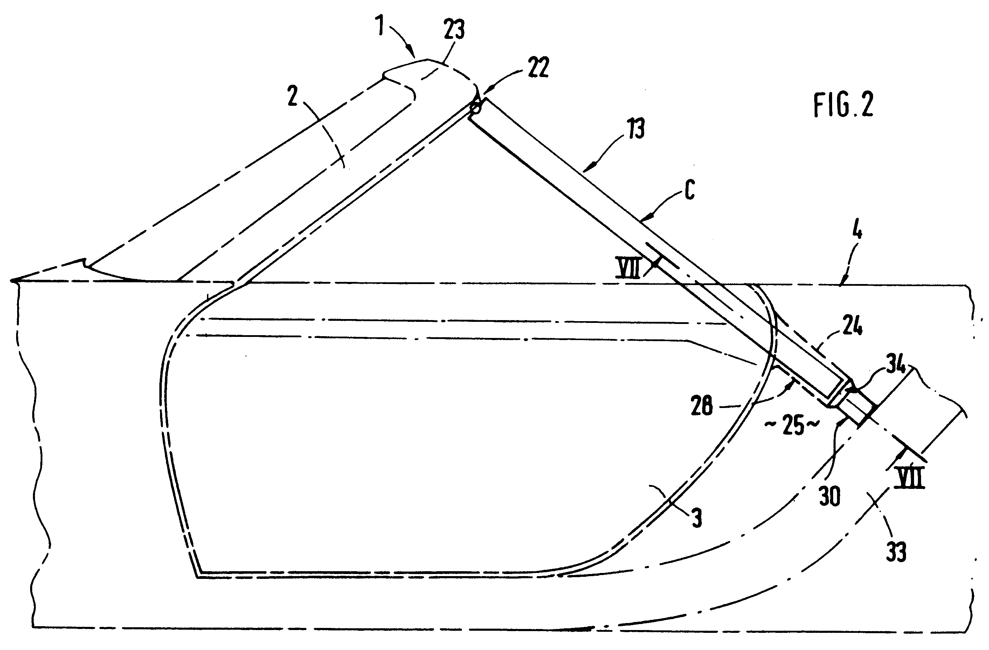

Das der Aufnahme 24 zugekehrte Ende der Stützstrebe 13 wird im Gefahrenfall durch die Aktivierungseinrichtung 12 etwa bis zu einem hinteren Ende 34 des ersten Rohrabschnittes 28 der Aufnahme 24 bewegt. Bei einer Fehlauslösung des Systems kann die Stützstrebe 13 in einfacher Weise wieder in die Ablagestellung A zurückgeführt werden (siehe Fig. 2; Zwischenstellung C der Stützstrebe).

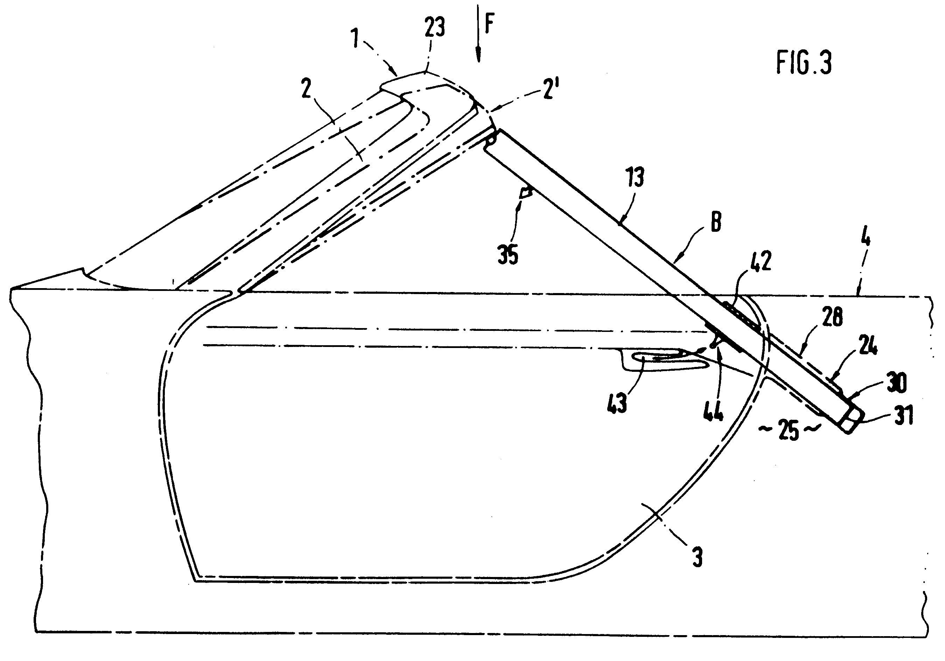

Bei einem Fahrzeugüberschlag und einer dabei auftretenden Krafteinwirkung F von oben auf die Windschutzsäule 2 wird diese in die strichpunktiert dargestellte Lage 2' bewegt und gleichzeitig die Stützstrebe 13 in den zweiten Rohrabschnitt 30 der Aufnahme 24 hineinbewegt, wobei durch Aufweiten des zweiten Rohrabschnittes 30 wirkungsvoll Energie absorbiert wird. Die Eindringbewegung der Stützstrebe 13 wird durch den Anschlag 31 innerhalb des zweiten Rohrabschnittes 30 begrenzt (siehe Fig. 3).

Beim Verlagern der Stützstrebe 13 von ihrer Ablagestellung A in die Stellung C bzw. in die Wirkstellung B bewegt die Aktivierungseinrichtung 12 das vordere Ende 17 der Stützstrebe 13 innerhalb der Führungsschiene 18 nach oben. Dabei löst sich die Stützstrebe 13 vom Türinnenblech 7.

Beim Hochschwenken der Stützstrebe 13 um die drehbar gelagerte hintere Führungseinrichtung 36 verschiebt sich die Stützstrebe 13 in der Führungseinrichtung 36 nach hinten bzw. unten in Richtung Aufnahme 24. Die Aufnahme 24 verläuft in Verlängerung der Stützstrebe 13. Die Führungseinrichtung 36 wird durch eine die Stützstrebe 13 umgebende Schiebemuffe 42 gebildet, die mit einer Kulissenführung 43 zusammenwirkt. In der hochgeschwenkten Stellung C bzw. der Wirkstellung B ist ein Fußabschnitt 44 der Schiebemuffe 42 außer Eingriff mit der türseitig angeordneten Kulissenführung 43.

Sobald das hintere Ende der Stützstrebe 13 in die Aufnahme 24 eingreift, ist die Stützstrebe 13 von der Fahrzeugtür 3 entkoppelt.

Das Gleitstück 19 ist in die C-förmige Führungsschiene 18 eingesetzt und verschiebbar in dieser geführt. Ein Anschlag 41 definiert die untere Endlage des Gleitstückes 19 in der Führungsschiene 18 (Fig. 9).

Die Stützstrebe 13 wird gemäß Fig. 4 durch ein langgestrecktes, am vorderen Ende 17 abgeflachtes Rohr gebildet, das örtlich am Türinnenblech 7 lösbar in Lage gehalten ist. Dies kann durch Klipse 35, Klettverschlüsse oder dgl. erfolgen.

Die Stützstrebe 13 ist in ihrer Ablagestellung A durch einen schwenkbaren, oberen Abschnitt 37 der Türinnenverkleidung 10 abgedeckt. Beim Auslösen der Aktivierungseinrichtung 12 wird dieser schwenkbare Abschnitt 37 um die untenliegende Drehachse 38 nach innen hin in Richtung Fahrgastraum 9 bewegt und die Stützstrebe 13 anschließend in ihre Stellung C überführt.

Gemäß einer zweiten Ausführungsform wird die Stützstrebe 13 durch ein mit einer Ummantelung 39 versehenes Rohr 40 gebildet, wobei die Ummantelung 39 der Form der stufenförmigen Einprägung 14 und der Kontur der Türinnenverkleidung 10 angepaßt ist (Fig. 5). Bei dieser Variante bildet die Stützstrebe 13 einen oberen Endbereich der Türinnenverkleidung 10 bzw. eine Schlüsselleiste der Fahrzeugtür 3. Die aus Schaumstoff oder dgl. gebildete Ummantelung 39 ist der Oberflächenkontur der Innnenverkleidung angepaßt.

Am oberen Endbereich 22 der Windschutzsäule 2 ist im Übergangsbereich zum querverlaufenden oberen Scheibenrahmen 23 eine nicht näher dargestellte Arretiereinrichtung vorgesehen, die die Stützstrebe 13 in ihrer Wirkstellung B kraftübertragend mit der Windschutzsäule 2 verbindet. Die Arretiereinrichtung kann durch einen Bayonettverschluss, einen Hakenverschluss oder dgl. gebildet werden (nicht näher dargestellt).

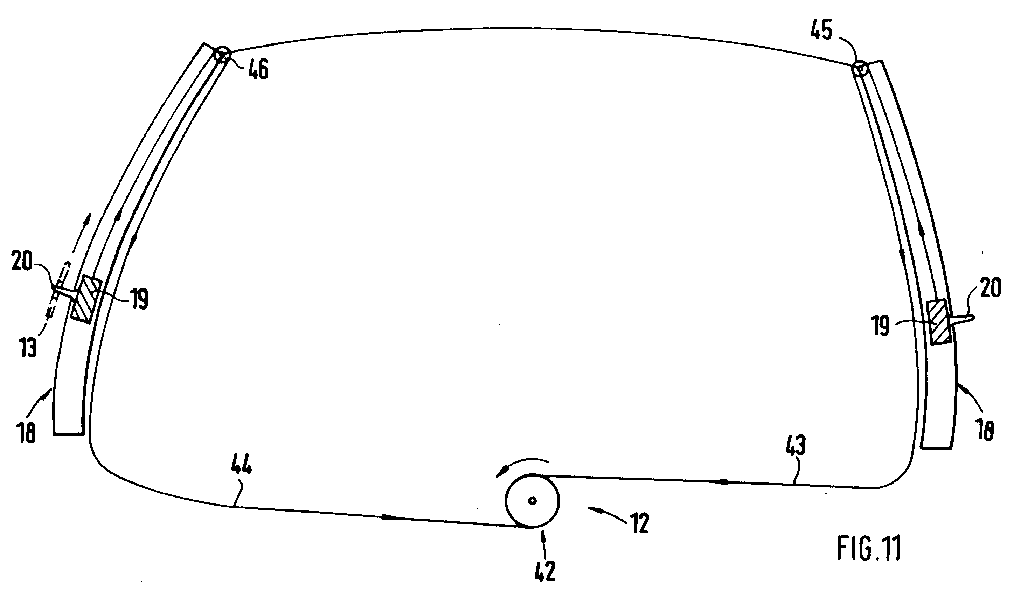

In Fig. 11 ist eine Aktivierungseinrichtung 12 dargestellt, die im Ausführungsbesipiel nach dem Prinzip eines Gurtstraffers ausgebildet ist und einen zentralen Aufrollmechanismus 42, Zugseile 43, 44 und Umlenkelemente 45, 46 umfaßt.
Die beiden Zugseile 43, 44 sind an ihren einen Enden mit den Gleitstücken 19 fest verbunden, wogegen die anderen Enden der Zugseile 43, 44 mit dem Aufrollmechanismus 42 zusammenwirken. Beim Auslösen des Sensors im Falle eines Fahrzeugüberschlages wird der Aufrollmechanismus 42 aktiviert und das mit den Stützstreben 13 in Wirkverbindung stehende Gleitstück 19 in der Führungschiene 18 bis zu einem oberen Endbereich 22 der Windschutzsäulen 2 hochbewegt. In der oberen Endlage wird das Gleitstück 19 bzw. die Stützstrebe 13 durch die Arretiereinrichtung fixiert.

## Patentansprüche

1. Vorrichtung zur Erhöhung der Knicksteifigkeit von Windschutzsäulen (2) eines Fahrzeuges, insbesondere von stark geneigten Windschutzsäulen (2) eines Cabriolets, wobei die Vorrichtung zumindest eine mit einer Aktivierungseinrichtung (12) zusammenwirkende, etwa in Fahrzeuglängsrichtung verlaufende Stützstrebe (13) umfaßt, die in ihrer Ablagestellung (A) etwa horizontal ausgerichtet ist und sich in einem oberen Bereich einer ein Türinnenblech (7) aufweisenden seitlichen Fahrzeugtür (3) erstreckt, wogegen ein der Windschutzsäule (2) zugekehrtes Ende der Stützstrebe (13) im Gefahrenfall durch die Aktivierungseinrichtung (12) entlang einer Führungsschiene (18) an der Windschutzsäule (2) bis zu deren oberen Endbereich (22) in eine Wirkstellung hochbewegt wird, **dadurch gekennzeichnet,** daß die Stützstrebe (13) in ihrer Ablagestellung (A) an einer dem Fahrgastraum (9) zugekehrten Einprägung (14) der Fahrzeugtür (13) lösbar festgelegt ist, wogegen die Stützstrebe (13) in der hochgeschwenkten Stellung (C) und der Wirkstellung (B) von der Fahrzeugtür (3) vollständig entkoppelt und in der Wirkstellung (B) einerseits mit dem oberen Endbereich (22) der Windschutzsäule (2) und andereseits mit einer benachbart der Fahrzeugtür (3) angeordneten, aufbauseitig feststehenden Aufnahme (24) kraftübertragend verbunden ist.

2. Vorrichtung nach Anspruch 1, **dadurch gekennzeichnet,** daß sich die Stützstrebe (13) in ihrer Ablagestellung (A) über einen wesentlichen Teil der Länge der Fahrzeugtür (3) erstreckt, wobei ein vorderes Ende (17) der Stützstrebe (13) bei geschlossener Fahrzeugtür (3) mit einem innerhalb der Führungsschiene (18) angeordneten Gleitstück (19) in Wirkverbindung steht und ein hinteres Ende der Stützstrebe (13) über eine schwenkbare Führungseinrichtung (36) mit dem Türinnenblech (7) lösbar verbunden ist.

3. Vorrichtung nach den Ansprüchen 1 und 2, **dadurch gekennzeichnet,** daß die Stützstrebe (13) durch ein durchgehendes Rohr gebildet wird, das örtlich am Türinnenblech (7) lösbar in Lage gehalten ist, wobei die Stützstrebe (13) in ihrer Ablagestellung A durch einen schwenkbaren Abschnitt (37) einer Türinnenverkleidung (10) abgedeckt ist.

4. Vorrichtung nach den Ansprüchen 1 und 2, **dadurch gekennzeichnet,** daß die Stützstrebe (13) durch ein mit einer Ummantelung (39) versehenes Rohr (40) gebildet wird, wobei die Ummantelung (39) annähernd der Form der stufenförmigen Einprägung (16) des Türinnenblechs (7) und abschnittsweise der Kontur der Türinnenverkleidung (10) angepasst ist.

5. Vorrichtung nach Anspruch 1, **dadurch gekennzeichnet,** daß am oberen Endbereich (22) der Windschutzsäule (2) eine Arretiereinrichtung vorgesehen ist, durch die die Stützstrebe (13) in ihrer hochgeschwenkten Stellung (C) bzw. der Wirkstellung (B) fest mit der Windschutzsäule (2) verbunden ist.

6. Vorrichtung nach Anspruch 1, **dadurch gekennzeichnet,** daß im Gefahrenfall die Stützstrebe (13) durch die Aktivierungseinrichtung (12) entlang der Führungsschiene (18)der Windschutzsäule (2)hochbewegt und dabei um die hintenliegende Führungseinrichtung (36) nach oben geschwenkt wird und daß gleichzeitig das hintere Ende der Stützstrebe (13) nach unten in eine im Bereich der B-Säule (25) angeordnete Aufnahme (24) hineinbewegt wird und mit dieser abstützend zusammenwirkt.

7. Vorrichtung nach den Ansprüchen 1 und 6, **dadurch gekennzeichnet,** daß die Aufnahme (24) innerhalb eines Hohlraumes (26) der B-Säule (25) angebracht ist.

8. Vorrichtung nach den Ansprüchen 1 und 6, **dadurch gekennzeichnet,** daß die Aufnahme (24) an der dem Fahrgastraum (9) zugekehrten Seite der B-Säule (25) vorgesehen ist.

9. Vorrichtung nach einem oder mehreren der vorangegangenen Ansprüche, **dadurch gekennzeichnet,** daß die Aufnahme (24) zumindest einen mit einer trichterförmigen Einführöffnung (27) versehenen ersten Rohrabschnitt (28) umfaßt, der das der Windschutzsäule (2) abgekehrte Ende der Stützstrebe (13) in ihrer Stellung (C) aufnimmt, wobei zwischen dem ersten Rohrabschnitt (28) und dem eingeführten Ende der Stützstrebe (13) ein Spielsitz vorgesehen ist.

10. Vorrichtung nach einem oder mehreren der vorangegangenen Ansprüche, **dadurch gekennzeichnet,** daß sich an den ersten Rohrabschnitt (28) - in Einführrichtung der Stützstrebe (13) gesehen - ein zweiter Rohrabschnitt (30) anschließt, der einen kleineren Innendurchmesser aufweist als der Außendurchmesser der Stützstrebe (13) und daß im Bereich des zweiten Rohrabschnittes (28) ein Anschlag (31) für die Stützstrebe (13) vorgesehen ist.

11. Vorrichtung nach einem oder mehreren der vorangegangenen Ansprüche, **dadurch gekennzeichnet,** daß die Stützstrebe (13) in ihrer Ablagestellung (A) und bei geschlossener Tür (3) als Türverstärkung bei einem Seitencrash wirkt.

12. Vorrichtung nach einem oder mehreren der vorangegangenen Ansprüche, **dadurch gekennzeichnet,** daß das der Aufnahme (24) zugekehrte Ende der Stützstrebe (13) im Gefahrenfall durch die Aktivierungseinrichtung (12) etwa bis zu einem hinteren Ende (34) des ersten Rohrabschnittes (28) der Aufnahme (24) bewegt wird und daß bei einer Krafteinwirkung von oben, beispielsweise bei einem Überschlag auf die Windschutzsäule (2) das der Aufnahme (24) zugekehrte Ende der Stützstrebe (13) unter Energieabsorption in den zweiten Rohrabschnitt (30) hineinbewegt wird, wobei diese Eindringbewegung durch den Anschlag (31) begrenzt wird.

## Claims

1. A device for increasing the buckling resistance of windscreen columns (2) of a vehicle, in particular of substantially inclined windscreen columns (2) of a cabriolet, wherein the device comprises at least one support brace (13) which cooperates with an activating device (12) and extends substantially in the longitudinal direction of the vehicle and which is orientated substantially horizontally in the lowered position (**A**) thereof and extends in an upper region of a side door (3) of the vehicle provided with an inner panel (7), whereas in the event of danger one end of the support brace (13) facing the windscreen column (2) is raised by the activating device (12) along a guide rail (18) on the windscreen column (2) as far as the upper end region (22) thereof to arrive in an operative position, **characterized in that** in its lowered position (**A**) the support brace (13) is detachably secured against an impressed portion (14) of the vehicle door (3) facing the passenger compartment (9), whereas in the raised position (**C**) and the operative position (**B**) the support brace (13) is completely disconnected from the vehicle door (3) and in the operative position (**B**) is connected in a force-transmitting manner at one end to the upper end region (22) of the windscreen column (2) and at the other end to a receiving means (24) arranged adjacent to the vehicle door (3) and fixed on the body.

2. A device according to Claim 1, **characterized in that** in its lowered position (**A**) the support brace (13) extends over a substantial part of the length of the vehicle door (3), wherein a front end (17) of the support brace (13) is operatively connected to a sliding member (19) arranged inside the guide rail (18) when the vehicle door (3) is closed, and a rear end of the support brace (13) is detachably connected to the inner door panel (7) by way of a pivotable guide device (36).

3. A device according to Claims 1 and 2, **characterized in that** the support brace (13) is formed by a continuous tube held detachably in position locally on the inner door panel (7), wherein the support brace (13) is covered in its lowered position (**A**) by a pivotable portion (37) of an inner door lining (10).

4. A device according to Claims 1 and 2, **characterized in that** the support brace (13) is formed by a tube (40) provided with a casing (39), wherein the casing (39) is substantially adapted to the shape of the stepped impressed portion (16) of the inner door panel (7) and in part to the contour of the inner door lining (10).

5. A device according to Claim 1, **characterized in that** a locking device is provided at the upper end area (22) of the windscreen column (2), the support brace (13) being securely connected in its pivoted-up position (**C**) or the operative position (**B**) to the windscreen column (2) by the said locking device.

6. A device according to Claim 1, **characterized in that** in the event of danger the support brace (13) is raised along the guide rail (18) of the windscreen column (2) by the activating device (12) and is pivoted upwards by the guiding device (36) situated to the rear, and at the same time the rear end of the support brace (13) is moved downwards into a receiving means (24) arranged in the region of the B-column (25) and cooperates with the said receiving means (24) in a supporting manner.

7. A device according to Claims 1 and 6, **characterized in that** the receiving means (24) is arranged inside a cavity (26) in the B-column (25).

8. A device according to Claims 1 and 6, **characterized in that** the receiving means (24) is provided on the side of the B-column (25) facing the passenger compartment (9).

9. A device according to one or more of the preceding Claims, **characterized in that** the receiving means (24) comprises at least one first tube portion (28) provided with a funnel-shaped insertion opening (27) and receiving the end of the support brace (13) remote from the windscreen column (2) in its position (**C**), wherein a loose fit is provided between the first tube portion (28) and the inserted end of the support brace (13).

10. A device according to one or more of the preceding Claims, **characterized in that** a second tube portion (30) having a smaller internal diameter than the external diameter of the support brace (13) adjoins the first tube portion (28), as viewed in the insertion direction of the support brace (13), and a stop (31) for the support brace (13) is provided in the region of the second tube portion (30).

11. A device according to one or more of the preceding Claims, **characterized in that**, in the lowered position (**A**) of the support brace (13) and when the door (3) is closed, the support brace (13) acts as a door reinforcement in the event of a lateral crash.

12. A device according to one or more of the preceding Claims, **characterized in that** in the event of danger the end of the support brace (13) facing the receiving means (24) is moved by the activating device (12) substantially as far as a rear end (34) of the first tube portion (28) of the receiving means (24), and when force is applied on the windscreen column (2) from above, for example in the event of overturning, the end of the support brace (13) facing the receiving means (24) is moved into the second tube portion (30) with the absorption of energy, wherein this penetration movement is limited by the stop (31).

## Revendications

1. Dispositif destiné à accroître la résistance au flambage de montants de pare-brise (2) d'un véhicule automobile, en particulier de montants de pare-brise (2) fortement inclinés d'un cabriolet, dans lequel le dispositif comprend au moins une entretoise d'appui (13) coopérant avec un dispositif d'activation (12), s'étendant à peu près dans la direction longitudinale du véhicule, entretoise qui est orientée à peu près horizontalement dans sa position rétractée (A) et s'étend dans une zone supérieure d'une porte latérale (3) du véhicule, présentant une tôle intérieure (7) de porte, tandis qu'une extrémité tournée vers le montant de pare-brise (2), de l'entretoise d'appui (13), est déplacée vers le haut dans une position active, en cas de risque, par le dispositif d'activation (12), le long d'un rail de guidage (18), sur le montant de pare-brise (2), jusqu'à sa zone d'extrémité supérieure (22), caractérisé en ce que l'entretoise d'appui (13) dans sa position rétractée (A) est fixée de manière amovible, contre une empreinte (14), tournée vers l'habitacle (9), de la porte (13) du véhicule, tandis que dans la position pivotée vers le haut (C) et dans la position active (B), l'entretoise d'appui (13) est totalement désaccouplée de la porte (3) du véhicule, et dans la position active (B) elle est reliée de manière à transmettre les forces d'une part avec la zone d'extrémité supérieure (22) du montant de pare-brise (2) et d'autre part avec un logement (24) fixe côté carrosserie, situé à proximité de la porte (3) du véhicule.

2. Dispositif selon la revendication 1, caractérisé en ce que l'entretoise d'appui (13) dans sa position rétractée (A) s'étend sur une partie essentielle de la longueur de la porte (3) du véhicule, une extrémité avant (17) de l'entretoise d'appui (13) étant en liaison active avec un coulisseau (19), situé à l'intérieur du rail de guidage (18), lorsque la porte (3) du véhicule est fermée et une extrémité arrière de l'entretoise d'appui (13) est reliée de manière amovible avec la tôle intérieure (7) de la porte, par un dispositif de guidage (36) pivotable.

3. Dispositif sel on les revendications 1 et 2, caractérisé en ce que l'entretoise d'appui (13) est formée par un tube continu, qui est maintenu en position de manière amovible, localement, sur la tôle intérieure (7) de la porte, l'entretoise d'appui (13) étant recouverte, dans sa position rétractée (A), par une portion (37) pivotante d'un revêtement intérieur (10) de la porte.

4. Dispositif sel on les revendications 1 et 2, caractérisé en ce que l'entretoise d'appui (13) est formée par un tube (40) pourvu d'un gainage (39), le gainage (39) étant adapté approximativement à la forme de l'empreinte (16) en gradins de la tôle intérieure (7) de la porte et par endroits au contour du revêtement intérieur (10) de la porte.

5. Dispositif sel on la revendication 1, caractérisé en ce que sur la zone d'extrémité (22) supérieure du montant de pare-brise (2) est prévu un dispositif de blocage, par lequel l'entretoise d'appui (13) est solidaire dans sa position (C) pivotée vers le haut ou la position active (B), du montant de pare-brise (2).

6. Dispositif sel on la revendication 1, caractérisé en ce qu'en cas de risque l'entretoise d'appui (13) est déplacée vers le haut par le dispositif d'activation (12), le long du rail de guidage (18) du montant de pare-brise (2) et dans ce cas est pivotée vers le haut autour du dispositif de guidage (36) situé à l'arrière, et en ce qu'en même temps l'extrémité arrière de l'entretoise d'appui (13) est déplacée vers le bas dans un logement (24), situé dans la zone du montant B (25) et coopère avec celui-ci pour servir d'appui.

7. Dispositif sel on les revendications 1 et 6, caractérisé en ce que le logement (24) est pratiqué à l'intérieur d'une cavité (26) du montant B (25).

8. Dispositif sel on les revendications 1 et 6, caractérisé en ce que le logement (24) est prévu sur le côté, tourné vers l'habitacle (9), du montant B (25).

9. Dispositif selon une ou plusieurs des revendications précédentes, caractérisé en ce que le logement (24) comprend au moins une première portion de tube (28), pourvue d'une ouverture d'introduction (27) en forme de cône, portion qui loge l'extrémité, tournée à l'opposé du montant de pare-brise (2) de l'entretoise d'appui (13) dans sa position (C), un ajustement avec jeu étant prévu entre la première portion de tube (28) et l'extrémité introduite de l'entretoise d'appui (13).

10. Dispositif sel on une ou plusieurs des revendications précédentes, caractérisé en ce qu'à la première portion de tube (28) - vu dans le sens d'introduction de l'entretoise d'appui (13) - fait suite une deuxième portion de tube (30), qui présente un plus petit diamètre intérieur que le diamètre extérieur de l `entretoise d'appui (13) et en ce que dans la zone de la deuxième portion de tube (28) est prévue une butée (31) pour l'entretoise d'appui (13).

11. Dispositif sel on une ou plusieurs des revendications précédentes caractérisé en ce que dans sa position rétractée (A) et lorsque la porte (3) est fermée, l'entretoise d'appui (13) sert de renfort de porte en cas de collision latérale.

12. Dispositif selon une ou plusieurs des revendications précédentes, caractérisé en ce que l'extrémité, tournée vers le logement (24), de l'entretoise d'appui (13) est déplacée, en cas de risque, par le dispositif d'activation (12), à peu près jusqu'à une extrémité arrière (34) de la première portion de tube (28) du logement (24) et en ce que dans le cas où une force agit à partir du haut, par exemple en cas de renversement sur le montant de pare-brise (2), l'extrémité, tournée vers le logement (24), de l'entretoise d'appui (13), est déplacée, avec absorption d'énergie, à l'intérieur de la deuxième portion de tube (30), ce mouvement de pénétration étant limité par la butée (31).
